# EUROPÄISCHE PATENTANMELDUNG

(11) **EP 0 662 410 A1**
(43) Veröffentlichungstag der Anmeldung: **12.07.1995**
(21) Anmeldenummer: 94120872.0
(22) Anmeldetag: 28.12.1994
(51) Int. Cl.: B60T 8/00

(54) **Antiblockiereinrichtung**

(30) Priorität: 05.01.1994 DE 4400195
(71) Anmelder: SIEMENS AKTIENGESELLSCHAFT, D-80333 München (DE)
(72) Erfinder: Melbert, Dr. Ing. Joachim, D-82041 Deisenhofen (DE)

(57) **Zusammenfassung**

Antiblockiereinrichtung für steuerbare Bremssysteme mit jeweils einer Sensoranordnung zur Erfassung der Drehbewegung eines einem Bremssystem zugehörigen Rades, sowie jeweils einer Steuereinrichtung zur Steuerung des Bremssystems, mit einer Logikanordnung, die die von der Sensoranordnung gelieferten Signale in digitale Signale entsprechend der Drehbewegung umsetzt, einer Fuzzyrecheneinheit, die mittels programmierter Rechenvorschriften die Steuerwerte für die Steuereinrichtung ermittelt sowie einem Mikroprozessor, der die von der Logikanordnung erzeugten digitalen Signale an die Fuzzyrecheneinheit übergibt und mittels der von der Fuzzyrecheneinheit errechneten Steuerwerte die Steuereinrichtung zur Steuerung des Bremssystems ansteuert.

## Beschreibung

Die Erfindung betrifft eine Antiblockiereinrichtung gemaß dem Oberbegriff des Anspruchs 1.

Eine derartige Antiblockiereinrichtung für den Kfz-Bereich ist in der DE-A1-32 34 637 beschrieben. Bei diesen Systemen werden ein Mikrokontroller oder ein Mikroprozessor und entsprechende Wandler benötigt, um die von den Sensoranordnungen erzeugten analogen Signalen in Signale entsprechend der Drehbewegung des dem Bremssystem zugehörigen Rades umzusetzen, sowie unter Steuerung eines Antiblockieralgorithmus aufgrund dieser Daten das jeweilige Bremssystem zu regeln.

Eine den obigen Ausführungen ähnliche Antiblockiereinrichtung ist insbesondere in "PKW-Bremsanlagen", Bosch Technische Unterrichtung, 1989 insbesondere auf Seite 20ff, beschrieben. Aus der DE OS 28 44 279 ist ein Verfahren zum Regeln des Bremsdruckes in blockiergeschützten Fahrzeugbremsanlagen bekannt. Wie der DE OS 28 44 297 zu entnehmen ist, müssen verschiedene Kontrolldaten erzeugt werden um ein Regeln des Bremsdruckes in blockiergeschützten Fahrzeugbremsanlagen zu ermöglichen. So ist z.B. eine Differenzierer- und Schlupfwerterzeugung notwendig, wie sie beispielsweise in der DE 26 31 227 beschrieben ist. Weitere Teilprogramme sind beispielsweise in der DE 26 55 165 und der DE 27 17 383 beschrieben.

Da, wie den genannten Druckschriften zu entnehmen ist, der Algorithmus relativ kompliziert ist und alle denkbaren Möglichkeiten, die bei einem Kfz auftreten können, z.B. Kurvenfahrt, langsame Fahrt usw., berücksichtigen werden müssen, werden Mikroprozessoren benötigt, deren Rechenleistung sehr hoch sein muß. Hierbei handelt es sich in vielen Fällen um 16 Bit Mikrokontroller, sogenannter "High-End" Mikrokontrollern.

Ein Nachteil derartiger Anordnung ist es, daß diese Mikroprozessoren im Vergleich zu einfachen Mikroprozessoren, z.B. 4 Bit Mikrokontrollern, sehr teuer sind.

In der US-Patentschrift 5 001 640 ist ein Antiblockiersystem für Kraftfahrzeuge unter Verwendung einer Fuzzy-Steuerung beschrieben ist. Die Verarbeitung der Fuzzy-Regeln sowie die Ansteuerung der Steuerungseinrichtungen des Bremssystems wird insgesamt von einer elektronischen Steuerungseinrichtung in Form eines Mikro-Controllers durchgeführt. In der US-Patentschrift 4 842 342 ist ein Antiblockiersystem für Kraftfahrzeuge unter Verwendung einer Fuzzy-Steuerung im Hinblick auf detaillierte Fuzzy-Regeln beschrieben.

Aufgabe der vorliegenden Erfindung ist es, eine einfache Antiblockiereinrichtung vorzusehen, welche kostengünstig unter Verwendung eines standardgemäßen Mikroprozessors herzustellen ist.

Diese Aufgabe wird durch den kennzeichnenden Teil des Anspruchs 1 gelöst. Weiterbildungen sind Kennzeichen der Unteransprüche.

Vorteil der Erfindung ist es, durch Einsatz einer Fuzzyrecheneinheit, z.B. eines Fuzzycoprozessors, sowie durch Einsatz einer Logikanordnung, zur Ermittlung der Drehbewegungssignale rechenintensive Aufgaben außerhalb des Mikroprozessors/Controllers durchzuführen, so daß ein sehr einfacher Mikroprozessor verwendet werden kann, dessen Aufgabe es lediglich ist, die gelieferten und berechneten Signale zwischen den Einheiten auszutauschen. In Kombination ist eine derartige Einrichtung sehr viel kostengünstiger herzustellen als bisherige Systeme oder bei vergleichbaren Herstellkosten kann die Regelqualität gesteigert werden.

Die Erfindung wird nachfolgend anhand einer Figur näher erläutert.

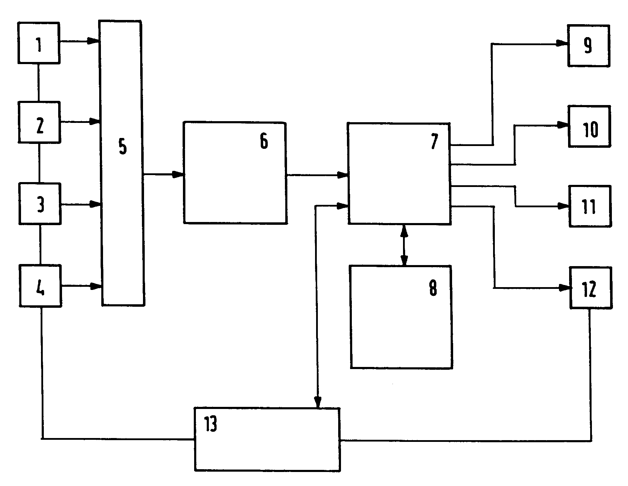

Figur 1 zeigt ein Blockschaltbild der erfindungsgemäßen Anordnung.

Zur Erfassung der Drehbewegung eines jeden Rades von z.B. einem Kraftfahrzeug, sind vier Hall-Sensoren 1, 2, 3, 4 vorgesehen, deren Ausgangssignale über eine Sensorüberwachungseinrichtung 5 an eine Logikanordnung 6 übermittelt werden. Die Logikanordnung 6 wandelt die gelieferten Signale der Sensoranordnungen 1, 2, 3, 4 in der jeweiligen Drehbewegung entsprechende digitalen Signale um. Diese gewandelten bzw. aufbereiteten Radsignale werden an einen Standardmikroprozessor 7 übermittelt.

An den Standardmikroprozessor 7 ist eine Fuzzyrecheneinheit 8, z.B. ein Fuzzycoprozessor bidirektional angeschlossen. Desweiteren sind jeweils einem oder mehreren Rad zugehörige Steuereinrichtungen 9, 10, 11, 12 vorgesehen, die von dem Standardmikroprozessor 7 angesteuert werden. Diese Steuereinrichtungen 9, 10, 11, 12 können z.B. Treiberstufen sein, die zur Ansteuerung von Magnetventilen dienen.

Die Magnetventile ihrerseits sind im Bremssystem integriert und können je nach Ansteuerung den Bremsdruck regeln. Schließlich ist eine Funktionseinheit 13 vorgesehen, die unter anderem eine Sicherheitslogik und eine Diagnoseeinrichtung sowie eine Spannungsversorgungseinheit für die oben beschriebenen Einheiten aufweisen kann. Diese ist mit den Sensoranordnungen 1, 2, 3, 4, dem Prozessor 7 sowie den Steuereinrichtungen 9, 10, 11, 12 verbunden und liefert für alle Funktionseinheiten die Versorgungsspannung.

Eine Überwachungsanordnung ist z.B. aus der DE 25 57 358 bekannt.

Wie bereits oben beschrieben, dient die Logikeinheit 6 dazu den Standardmikroprozessor 7 zu entlasten, indem sie die von den Hall-Elementen gelieferten Signale in entsprechende digitale Drehbewegungssignale umsetzt.

Als Rad-Sensor-Elemente können z.B. Hall-IC's zur Erfassung von Drehbewegungen mittels Zahnräder verwendet werden. Der Fuzzycoprozessor 8 ermittelt aufgrund des in ihm gespeicherten Antiblockieralgorithmuses die zur Steuerung der Steuereinrichtungen 9, 10, 11, 12 notwendigen Signale.

Die hohe Rechenleistung eines Fuzzycoprozessors genügt um den aufwendigen Antiblockieralgorithmus umzusetzen und somit den Mikroprozessor 7 soweit zu entlasten, daß dessen Rechenleistung auf ein Minimum beschränkt werden kann. Die Aufgabe des Mikroprozessors beschränkt sich nun darin, die von der Logikanordnung ermittelten digitalen Signale 6 an den Fuzzycoprozessor 8 zu übermitteln und die vom Fuzzycoprozessor 8 errechneten Steuersignale in entsprechende Steuersignale für die Steuereinrichtungen 9, 10, 11, 12 umzusetzen. Dies könnte z.B. durch Pulsweitenmodulation oder dergleichen erfolgen.

Als Fuzzycoprozessor kann z.B. der Siemens Baustein SAE 81C 99 verwendet werden. Als Mikroprozessor kann jeder "Standard-Low-Cost"-8 Bit Mikrokontroller eingesetzt werden. Als Steuereinrichtungen 9, 10, 11, 12 eignen sich z.B. die Treiberstufen TLE 5224 von Siemens.

Die gesamte Anordnung mit Ausnahme der Sensoren kann kompakt auf einer kleinen Platine untergebracht werden oder mit speziellen Technologien können die Funktionseinheiten 5 bis 13 mit Ausnahme des Controllers 7 vollständig monolithisch integriert werden.

## Patentansprüche

1. Antiblockiereinrichtung für steuerbare Bremssysteme enthaltend
- jeweils eine Sensoranordnung (1, 2, 3, 4) zur Erfassung der Drehbewegung eines einem Bremssystem zugehörigen Rades,
- eine Steuereinrichtung (9, 10, 11, 12) zur Steuerung des jeweiligen Bremssystems,
- eine Logikanordnung (6), die die von den Sensoranordnungen (1, 2, 3, 4) gelieferten Signale in digitale Signale entsprechend der Drehbewegung umsetzt,
- sowie einen Mikroprozessor (7) zur Steuerung der Steuereinrichtungen (9, 10, 11, 12),
**dadurch gekennzeichnet,** daß
- eine Fuzzyrecheneinheit (8) vorgesehen ist, die mittels programmierter Rechenvorschriften die Steuerwerte für die Steuereinrichtungen (9, 10, 11, 12) aufgrund der von der Logikanordnung (6) ermittelten Drehbewegungssignale ermittelt,
- der Mikroprozessor (7) die von der Logikanordnung (6) erzeugten digitalen Signale an die Fuzzyrecheneinheit (8) übermittelt und mittels der von der Fuzzyrecheneinheit (8) errechneten Steuerwerte die Steuereinrichtungen (9, 10, 11, 12) zur Steuerung der jeweiligen Bremssysteme ansteuert, und
- die Fuzzyrecheneinheit (8) getrennt vom Mikroprozessor (7) monolithisch integriert ist.

2. Antiblockiereinrichtung nach Anspruch 1,
**dadurch gekennzeichnet,** daß eine Funktionseinheit (13) mit einer Sicherheitslogik und einer Diagnoseeinheit vorgesehen ist, die vom Mikroprozessor (7) gesteuert wird.

3. Antiblockiereinrichtung nach einem der vorhergehenden Ansprüche,
**dadurch gekennzeichnet,** daß zwischen den Sensoranordnugnen (1, 2, 3, 4) und der Logikanordnung (6) eine Sensorüberwachungsschaltung (5) vorgesehen ist.

4. Antiblockiereinrichtung nach einem der vorhergehenden Ansprüche,
**dadurch gekennzeichnet,** daß alle Funktionseinheiten mit Ausnahme der Sensoranordnungen und des Mikroprozessors monolithisch integriert sind.
